# EUROPEAN PATENT APPLICATION

(11) **EP 1 480 106 A1**
(43) Date of publication of application: **24.11.2004**
(21) Application number: 04380111.7
(22) Date of filing: 21.05.2004
(51) Int. Cl.: G06F 1/00, G07F 7/10, G07F 7/08

(54) **Electronic transaction system**

(30) Priority: 23.05.2003 ES 200301222
(71) Applicant: Cansino Fernandez, Francisco Manuel, 38007 Santa Cruz de Tenerife (ES); Diaz Torres, Nestor Javier, 38007 Santa Cruz de Tenerife (ES)
(72) Inventor: Cansino Fernandez, Francisco Manuel, 38007 Santa Cruz de Tenerife (ES); Diaz Torres, Nestor Javier, 38007 Santa Cruz de Tenerife (ES)
(74) Representative: Davila Baz, Angel

(57) **Abstract**

An electronic transaction system comprising at least one first subscriber interface (1), with first personal identification code (PIC1) reading/writing means (RW1) in first storage means (MEM1) associated with said first interface; at least one second subscriber interface (2), with the second personal identification code (PIC2) reading/writing (RW2) means in second storage means (MEM2) associated with said second interface; at least one mediator entity (3) independent from the subscriber interfaces; communication means (4) for sending and receiving data between the subscriber interfaces and with the mediator entity. The system comprises first, second and third encryption/decryption means (ENCR1, ENCR2, ENCR3), different from each other, associated with said first and second interfaces (1, 2) and with said mediator entity, respectively. And the mediator entity (3) comprises means of verification of the first and the second personal identification codes (PIC1, PIC2), means of certification of the legitimacy of the transaction, and means of generation of new first and second personal identification codes (PIC1', PIC2') different from the first and second personal identification codes (PIC1, PIC2).

## Description

### Field of the invention

The present invention is encompassed within electronic transactions, either business or of another type; i.e transactions carried out through a communications network, such as, for example, Internet.

### Background of the Invention

Currently existing electronic transaction systems lack a real end to end security which, taking into account the increase of subscribers and the number of electronic operations in the network, is more than necessary. The peer-to-peer connection models, client authentication manners, the layers of protocols used, the redundancy of information and the cryptographic and encryption systems do not manage to ensure parameters as important as the identity of final subscribers or the geographic location thereof.

The current electronic commerce and the payments through Internet are partially unprotected due to the evident impossibility to completely identify the parties participating in the transaction: on one hand, the subscriber who carries out the operation and who is interested in purchasing a product or service, and on the other hand, the company supplying said product and which has to be certain that the end subscriber is authorized to make the purchase online. Between both of them, a communications network which is nowadays insecure due to high operating capacity level of the IP protocol.

The commercial process through Internet is very structured and despite being able to undergo some variations, online commerce is a result of a move from the traditional method to the communication networks. Thus, online commerce is based on two main parties: the purchaser and the seller. The purchasing subscriber gains access to Internet by means of a conventional browser and enters into a virtual shop; once said purchasing subscriber has decided which object to purchase, the electronic payment operation is then proceeded to. And it is at this point where the critical part of the system begins. The purchaser introduces in a form and sends to the client a set of private personal data - personal identification number, credit card number, postal address, telephone number, ...-, which are received by the selling company which will use them in order to be paid the amount of the purchase by the banking, credit or financial institution. Once the purchase is made, the selling subscriber will issue a purchase note, which the purchasing subscriber will be able to use as an acknowledgment of receipt of the operation carried out.

Due to the fact that the commercial transaction model on Internet is only the electronic reflection of the sale by traditional direct dealing, this electronic transaction is deficient both in the operating model and in the security, since the existence of a fragile communication network in reference to data protection has not sufficiently been taken into account.

The main problems of the current system are:
- Identification of subscribers: the parties taking part in the commercial operation cannot demonstrate who they are in most operations, if they are authorized to carry out the purchase and sale and where it is carried out from. The selling subscriber cannot be completely certain if the purchaser is who he or she claims to be, if the purchaser is where he or she claims to be, or if the purchaser is authorized to use the bank data or the credit card which he or she uses. In turn, the purchasing subscriber cannot be certain that the company offering the product or the service which he or she has purchased is real, or if it is a non-existing company acting in a simulated manner.
- Insecurity of the IP network: the commercial operation carried out between purchasing subscriber and selling subscriber is carried out through a data network having an evident fragility. Thus, the possibility that an intruder can intercept a message circulating through Internet cannot be avoided by any of parties involved, since insecurity is inherent to the network and to the protocol on which Internet is based.
- Concealment of the data: the data which is sent between the purchasing subscriber and the selling subscriber travels in a pure state through Internet in practically all the usual online purchasing transactions. This, together with the insecurity of the IP network and the possibility that an intruder seizes and fraudulently uses the information of the commercial transaction, makes the communication of data somewhat insecure and which is in need an intelligent concealment.

The current trend and evolution in this matter is certainly leaning towards the concealment of the data through one-way encryption methods, i.e., only the sensitive information traveling from the purchasing subscriber to the selling subscriber is encrypted and protected, but not in the opposite direction. However, on one hand, these cryptographic models are not sufficient to overcome the transparency of the data on Internet; and on the another hand, other aspects essential for the absolute security of electronic transactions in IP are still being left defenseless, which has an influence on not overcoming the obstacle established with regard to the use of online commerce.

### Description of the Invention

The invention refers to a system according to claim 1 and to a method according to claim 8. Preferred embodiments of the system are defined in the dependent claims.

The electronic transaction system of the present invention solves the problems related to the existing systems, based on the triangulation of the information, the centralized recognition of the subscribers of the system and on the per-session update of the subscriber identifiers.

The electronic transaction system of the invention comprises at least one first subscriber interface, at least one second subscriber interface and at least one mediator entity, which is independent from the at least first and second subscriber interfaces. In this system, the first subscriber interface comprises first personal identification code reading/writing means in first storage means, which are associated with said first subscriber interface; similarly, the second subscriber interface comprises second personal identification code reading/writing means in second storage means associated with said second subscriber interface.

The system comprises communication means for sending and receiving data between said two subscriber interfaces and with the mediator entity.

The electronic transaction system of the invention is characterized in that it comprises first encryption/decryption means associated with said first subscriber interface, second encryption/decryption means associated with said second subscriber interface and third encryption/decryption means associated with said mediator entity, said encryption/decryption means being different from each other. The system is also characterized in that the mediator entity comprises means of verification of the first and second personal identification codes, means of certification of the legitimacy of the electronic transaction, and means of generation of new first and second personal identity codes, such that said first and second personal identification codes are different for each commercial transaction and for each subscriber.

According to the system of the invention, and though the first, second and third encryption/decryption means, an encryption of any piece of data is carried out before being sent though the communication means, regardless of the direction of the data; from the first subscriber interface to the mediator entity, from the second subscriber interface to the mediator entity, or from the latter to each one of other two, the sensitive data travels encrypted to thus provide the system with higher security.

According to a preferred embodiment, the mediator entity furthermore comprises means of verification of a first redundant identification code associated with said first subscriber interface. That is to say, for higher security, the first subscriber, though the corresponding first subscriber interface, will introduce, a part from his or her personal identification code, a redundant identification code, the validity of which will be verified by the mediator entity.

Preferably, the mediator entity furthermore comprises means of verification of a second redundant identification code associated with the second subscriber interface.

Also for the purpose of providing a higher security to the system, the first encryption/decryption means and/or the second encryption/decryption means and/or the third encryption/decryption means comprise means for inserting a random chain to the data to be encrypted, before carrying out such encryption.

Preferably, symmetric or asymmetric encryption/decryption means with a public key or with a private key will be used. According to the asymmetric-type encryption, there are two independent keys for encrypting and decrypting the data or the information. The encryption key will be public, such that the latter is not the critical point of the system, whereas the decryption key remains secret.

In this manner, in the first or second encryption/decryption means the data to be sent to the mediator entity are encrypted, and this entity and only this entity will be able to decrypt said data by means of the third encryption/decryption means; not even the subscriber himself or herself who encrypts the information can carry out the opposite process. Likewise, the data sent from the mediator entity to the subscribers will be asymmetrically encrypted, the first subscriber having one decryption key and the second subscriber having another one. Preferably, the first personal identification code reading/writing means together with the first storage means consist of an ICC smart card. Similarly, the second personal identification code reading/writing means together with the second storage means consist of an ICC-type smart card.

In this manner, the present electronic transaction system increases the real security ICC-type guarantees of commerce over IP (Internet Protocol).

To that end, the transaction system of the present invention is based on an electronic triangulation method, though which a series of essential aspects in the security of electronic transactions, for example, commercial transactions though the Network, which had been exposed up until now, are guaranteed.

For example, in a commercial electronic transaction, both the first subscriber (purchasing subscriber) and the second subscriber (selling subscriber) understand, by definition, their role in the system; the purchasing subscriber will be the one carrying out the purchase though Internet, and the selling subscriber will be the one selling the requested product or service.

Among the advantages of the new transaction system, the following can be mentioned:
- the virtual company carrying out the sale (the second subscriber, or, in the case of a commercial transaction, the selling subscriber) will have the certainty that the first subscriber (in this case, the purchasing subscriber) is valid;
- the purchasing subscriber will have the certainty that the virtual company is valid and authorized:

- there is a mediator entity which will certify at all times the validity of the ends (purchasing and selling subscribers), as well as the legitimacy of the commercial operation, thus protecting both the end subscribers and the financial institutions (in the case of a commercial transaction);
- both first and second subscribers will have the certainty that there is no possibility either to replace or to fraudulently use their personal identification codes, since the latter are stored in the integrated circuits of the smart cards , it is necessary to introduce a key as redundant information and, moreover, said personal identification code which is established in the card is different for each operation;
- the transmitted and received data, both for the end subscribers and for the mediator entity, are encoded and encrypted with different algorithms for the purchaser and for the seller. This prevents that any intruder extracting information from Internet can use it fraudulently;
- the update of the personal identification codes of the subscribers for each operation increases security, generating a second level in the protocol of assurances offered by this electronic transaction system.

Despite the fact that the electronic transaction system of the invention has been explained on the basis of commercial transactions, the system is not limited to this field, being perfectly applicable and adaptable to any other relational model, such as a relational model between the Administration and those administered though the Network; in such case, the so-called "purchasing subscriber" would be the "administered subscriber" and the "selling subscriber" would be the "administering subscriber"; likewise, in this case the mediator entity would be legally configured as an autonomous body of the Administration itself, but whose legal status ensures an equidistant position between the administration and those who are administered.

### Brief Description of the Drawings

A series of drawings are very briefly described below which help to better understand the invention and which are specifically related to an embodiment of said invention, shown as a non-limiting example thereof.
Figure 1 schematically shows a preferred embodiment of the electronic transaction system of the invention.
Figure 2 shows a flowchart of a commercial transaction carried out according to the system of the invention.

### Description of a Preferred Embodiment of the Invention

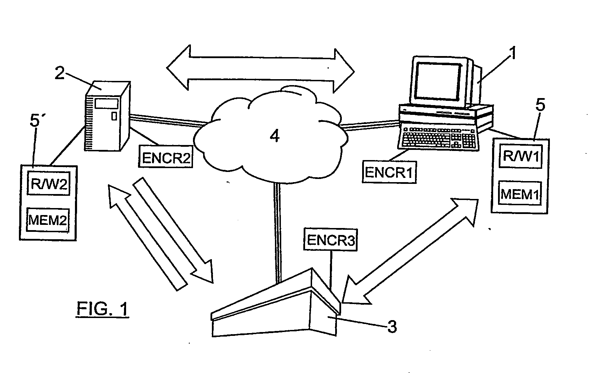

Figure 1 shows some of the elements of the system of the invention, for the case of a commercial electronic transaction. As this Figure 1 shows, a purchasing subscriber wishes to make a purchase through Internet (the selling subscriber will be the one selling the requested product or service), to which end, by means of a first subscriber interface 1, he or she gains access to the virtual shop of the selling subscriber; the purchasing subscriber chooses a product or service which he or she wishes to purchase and decides to make a purchase. The selling subscriber also has a second subscriber interface 2, through which the former can interact, for example, with the purchasing subscriber.

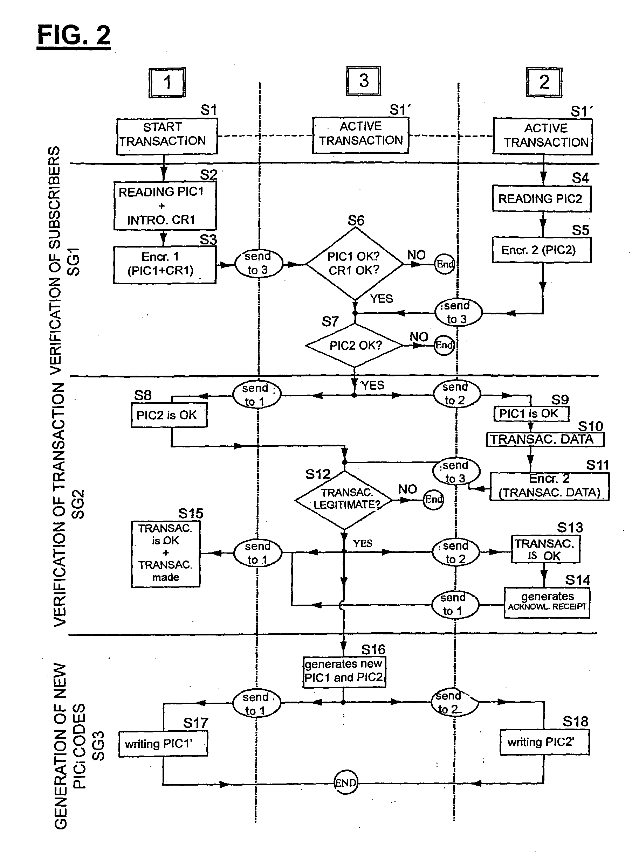

Figure 2 shows a flowchart of how the commercial transaction is carried out, and how and at what times the purchasing subscriber, the selling subscriber and the mediator entity intervene. The purchasing subscriber has decided to make a purchase from a selling subscriber and starts the transaction (step s1), which activates the transaction in the mediator entity and in the selling subscriber interface (step s1'). In order to carry out said purchase, the purchasing subscriber will have to introduce (step s2) in a smart card reader associated with its first subscriber interface 1, a card 5 with an integrated circuit ICC, which will contain a first personal identification code PIC1 which will authenticate him or her as a valid purchaser. Likewise, the purchasing subscriber (step s2) will have to introduce an additional key CR1 as redundant information. The combination of the first personal identification code PIC1 and the additional key CR1, after applying a first encryption thereto (step s3), will be transmitted by the network 4 to the mediator entity 3. At the other end, from the card 5' with an integrated circuit of the selling subscriber associated with the second subscriber interface 2, a second personal company identification code PIC2 valid for electronic commerce will be read (step s4), which, after applying a second encryption thereto (step s5) different from the first encryption of the purchasing subscriber, will be transmitted to the mediator entity 3.

Once these first and second personal identification codes PIC1 and PIC2 have been independently received by the mediator entity 3, which acts as a certifying entity, it will be checked that both purchasing and selling subscribers are valid (steps s6 and s7), and both will be notified right away that the party (subscriber) at the other end is completely recognized and authorized to proceed to the commercial transaction (steps s9 and s10). In this global subscriber verification step (step SG1), it is not explicitly indicated that the purchasing subscriber can proceed to the purchase: it is only specified that he or she is valid and authorized.

The following global step (step SG2) in the performance process of the mediator entity 3 lies in checking that the legitimacy of the commercial transaction, i.e. that the economic, financial or credit status of the purchasing subscriber, is sufficient to be able to make payment for that purchased. To that end, the mediator entity 3 will request the data relating to the commercial transaction (step s10) from the purchasing subscriber, such as for example, the amount to be paid by the purchasing subscriber, and the selling subscriber will automatically send said data after applying a second encryption thereto (step s11), which the mediator entity will compare to the purchase possibilities of the subscriber (step s12).

In the event that the purchasing subscriber can make payment for the purchase, the selling subscriber will be notified that this is the case (step s13), and the latter will create an acknowledgment of receipt with the complete data of the purchased product or service (step s14), for example, the price and web address of the purchase, and will send it to the purchasing subscriber. Likewise, the purchasing subscriber will be notified by the mediator entity that the commercial transaction has been carried out, and that therefore he or she has purchased the item, the price and the amount which has been charged to his or her personal account (step s15).

Once this has been done and the mere commercial operation has concluded, the mediator entity 3 will recover the personal identification codes PIC1 and PIC2 initially introduced by both purchasing and selling subscribers, and will apply a mathematical code conversion algorithm - different for each purchaser and seller - to each one of them, generating new codes PIC1' and PIC2', respectively (step s16). Each result obtained by the application of the suitable algorithms will be the new purchaser and seller codes, which will be sent to their respective owners and they will be written and stored in the integrated circuit of the cards 5, 5' (steps s17 and s18). Each card will store only its new personal identification code, which will be that used in the next electronic commerce operation which is carried out.

According to the system of the invention, an encryption of the information is carried out before being sent, regardless of what the direction thereof might be. That is to say, from the purchasing subscriber to the certifying entity, from the selling subscriber to said entity and from the latter to each one of the other two, sensitive data will travel encrypted to provide the model with higher security.

The chosen encryption method is the asymmetric encryption using a public key. This method is characterized by the existence of two independent keys for encrypting and decrypting the information. Thus, the encryption key will be public, such that the latter is not the critical point of the system, whereas the decryption key will remain secret.

With this method, the system of the purchasing or selling subscriber will encrypt the information to be sent to the mediator entity, and the latter and only the latter, will be that which will be able to decrypt the data. The security of this encryption system is such that not even the subscriber himself or herself who encrypts the information will be able to carry out the opposite process.

Thus, the information sent from the mediator entity to each one of the subscribers will likewise be asymmetrically encrypted, the purchaser having one type of decryption key and the seller having another one. The purchaser and the seller will thus have independent keys, which increases the security against spies or information leaks in the transmission medium.

## Claims

1. An electronic transaction system comprising
- at least one first subscriber interface (1), comprising first personal identification code (PIC1) reading/writing means (R/W1) in the first storage means (MEM1) associated with said first subscriber interface,
- at least one second subscriber interface (2) comprising second personal identification code (PIC2) reading/writing means (R/W1) in second storage means (MEM2) associated with said second subscriber interface,
- at least one mediator entity (3) independent from these at least two subscriber interfaces,
- communication means (4) for sending and receiving data between these at least two subscriber interfaces and with the mediator entity,
**characterized in that** the system comprises:
- first encryption/decryption means (ENCR1) associated with said first subscriber interface (1),
- second encryption/decryption means (ENCR2) associated with said second subscriber interface (2),
- third encryption/decryption means (ENCR3) associated with said mediator entity (3),
the three encryption/decryption means (ENCR1, ENCR2, ENCR3) being different from each other,
and **in that** the mediator entity (3) comprises
- means of verification of the first and second personal identification codes (PIC1, PIC2),
- means of certification of the legitimacy of the transaction, and
- means of generation of new first and second personal identification codes (PIC1', PIC2') different from the first and second personal identification codes (PIC1, PIC2).

2. A system according to claim 1, **characterized in that** the mediator entity comprises means of verification of a first redundant identification code associated with said first subscriber interface.

3. A system according to claim 1, **characterized in that** the mediator entity comprises means of verification of a second redundant identification code associated with said second subscriber interface.

4. A system according to any of claims 1-3, **characterized in that** the first and/or second and/or third encryption/decryption means comprise means for inserting a random chain to the data to be encrypted.

5. A system according to any of claims 1-4, **characterized in that** the first and/or second and/or third encryption/decryption means consist of symmetric or asymmetric encryption/decryption means with a public key or with a private key.

6. A system according to any of claims 1-5, **characterized in that** first personal identification code reading/writing means together with the first storage means consist of an ICC smart card.

7. A system according to any of claims 1-5, **characterized in that** second personal identification code reading/writing means together with the second storage means consist of an ICC-type smart card.

8. An electronic transaction method, comprising:
- having at least one first subscriber interface (1), with first reading/writing (R/W1) means for reading a first personal identification code (PIC1) stored in first storage means (MEM1) associated with said first subscriber interface,
- having at least one second subscriber interface (2), with second reading/writing (R/W2) means for reading a second personal identification code (PIC2) stored in second storage means (MEM2) associated with said second subscriber interface,
- having communication means for sending and receiving data between the at least two subscriber interfaces and with a mediator entity (3) which is independent from said at least two subscriber interfaces,
- having first encryption/decryption means (ENCR1) associated with said first subscriber interface (1),
- having second encryption/decryption means (ENCR2) associated with said second subscriber interface (2),
- having third encryption/decryption means (ENCR3) associated with said mediator entity (3),
the three encryption/decryption means (ENCR1, ENCR2, ENCR3) being different from each other,
- having in said mediator entity (3) means of verification of the first and the second personal identification codes (PIC1, PIC2), means of verification of the legitimacy of the transaction, and means of generation of new first and second personal identification codes (PIC1', PIC2'),
- sending said new first and second personal identification codes (PIC1', PIC2') to the first and second subscriber interfaces, respectively, for their writing in first and second storage means, respectively,
so that said first and second personal identification codes are different for each commercial transaction and for each subscriber.
